# EUROPEAN PATENT SPECIFICATION

(11) **EP 2 430 913 B1**
(45) Date of publication and mention of the grant of the patent: **19.08.2015**
(21) Application number: 11182043.7
(22) Date of filing: 20.09.2011
(51) Int. Cl.: A01K 1/01

(54) **Cable-driven traction assembly for systems for cleaning floors of the scraper-blade type**
Kabelantriebsvorrichtung für Bodenreinigungssysteme
Ensemble de traction de câbles pour des systèmes de nettoyage des sols

(30) Priority: 21.09.2010 IT CR20100030
(43) Date of publication of application: 21.03.2012
(73) Proprietor: Salvetti & Gervasi di Bologni Fabio E C. SNC, 46043 Castiglione delle Stiviere (MN) (IT)
(72) Inventor: Bologni, Fabio, 46043 Castiglione delle Stiviere (MN) (IT)
(74) Representative: Mari, Marco Giovanni

(56) References cited:
- DE-A1- 2 538 704
- DE-A1- 2 812 150
- DE-A1- 2 915 232
- US-A- 4 079 832

## Description

The present invention relates to the zootechnical field concerning cattle-farming, pig-farming, horse-farming, etc..., and in particular the present invention relates to a cable-driven traction assembly for systems for cleaning floors of the scraper-blade type that can be used in free stabling sheds.

Usually, to remove manure from animals' exercising yards and alleys inside the sheds, or to clean underground passages arranged underneath floors provided with fissures or to clean cages, automatic mechanical means are usually used, mainly of the scraper-blade type.

Said blades push the manure into a suitable collector channel or into storage tanks, arranged for instance at the head of the sheds.

Said scraper-blades, also called "little scrapers", can be of various types and with different dragging methods; the present invention relates in particular to scraper-blades of the cable-driven type, wherein cable generally refers to a metal cable, a rope, a cord or a chain, used as thread-like traction elements.

Substantially, traditional cable-driven type cleaning systems comprise a scraper-blade, of the "butterfly" or "folding" type, associated with a pulling cable, two traction assemblies motorized by means of motor reducers and arranged at the ends of said cable, and a device for alternatively activating the gear of the traction assemblies.

The butterfly scraper-blade is arranged as an open V when removing manure and closes up when moving back empty, in order not to take much space, thanks to a hinge constraint connecting the wings.

The folding scraper-blade, on the other hand, remains perpendicular to the path to be cleaned both when removing manure and when moving back empty.

The traction assemblies alternatively wind and unwind the cable, moving the scraper back and forth along the two directions so that when moving forward the scraper-blade moves the manure and when moving backward it goes back empty to its initial position.

Document DE 28 12 150 A1 discloses a system for cleaning floors of the scraper-blade type comprising two traction assemblies placed at the ends of the path to be cleaned and connected by a cable on which the scraper-blades are arranged.

Each traction assembly comprises:
- a frame for fixing to the ground;
- a drum, rotatably associated with said frame according to an axis of rotation, on which said cable is wound;
- a motor reducer, arranged for imparting a motion of rotation in just one direction on said drum by means of a driven shaft integral with said drive shaft.

The cleaning system further comprises a switch for activating or turning off alternately one or the other traction assembly, and therefore the unwinding of the cable in one direction or the other, and a device for braking the drums, necessary for the arrest of the cable at the time of inversion of its unwinding direction.

The use of said cable traction assemblies for systems for cleaning floors have some limits and drawbacks.

While the blade is moving along the two directions, the cable's winding and unwinding causes a significant consumption of energy.

In fact, as one traction assembly operates, the other one creates a passive resistance and slows down the movement of the cable's unwinding, since also the non-active motor reducer is always engaged and has to rotate opposite to the operating direction.

In an estimate of the energy balance, the electricity consumed by motor reducers is even higher than 65% of the standard consumption without resistance.

Such increased consumption can even activate the ammeter protection means in situations in which the resistance of the scraper-blade, together with the manure to be removed, exceeds the remaining 35% of the available power. These ammeter protection means are security devices usually provided onto said cleaning devices in order to avoid work overload to the prejudice of the motor reducer means.

As a consequence, the traction assemblies are subject to cosumption of energy higher that what is strictly necessary; they are subject to a significant wear and they easily deteriorate.

As a consequence, mainenance costs and/or costs for replacing parts of the cleaning system increase, and unscheduled damaging temporary stoppages of the sheds cleaning can occur.

Aim of the present invention is to overcome these limits, realizing a cable-driven traction assembly for systems for cleaning floors of the scraper-blade type that allows significant energy savings, that is considerably efficient, sturdy and durable.

The aims set forth are achieved by means of a cable-driven traction assembly for systems for cleaning floors of the scraper-blade type comprising:
- a frame for fixing to the ground;
- a drum, rotatably associated with said frame according to an axis of rotation, on which said cable is wound;
- a motor reducer, arranged for imparting a motion of rotation in just one direction on said drum by means of a drive shaft;
- a command and control unit for said traction assembly,

- a driven shaft, on which said drum is steadily fixed;
- a device for braking said drum, characterized in that said traction assembly further comprises:
- a selectively activatable mechanical-coupling member, set between said drive shaft and said driven shaft to enable start or interruption of transmission of the movement from said motor reducer to said drum.

According to a preferred embodiment of the present invention, said motor reducer co-operates with translating means associated with said frame to slide axially in the two directions parallel to said axis of rotation.

In particular, said translating means comprise a slide and a double-acting piston.

According to a further embodiment of the present invention, said coupling member comprises a first joint and a second joint which are complementary to one another arranged for co-operating by shape fit and respectively associated with said drive shaft and with said driven shaft.

According to another preferred embodiment of the present invention, said second joint is slidably associated with said driven shaft so as to generate a force of contrast through elastic means compressed under the action of thrust of said first joint.

According to an embodiment of the present invention, said braking device comprises a disk stably associated to said second joint and having a surface coated with a material with a high coefficient of friction, and a further contrast disk, fixed to said frame, wherein said surface is arranged for cooperating by sliding with said contrast disk in order to provide a resistant torque arranged for opposing unwinding of said cable from said drum when the drive shaft is decoupled from said driven shaft.

According to a further aspect of said embodiment, the coupling that is established between said first joint and said second joint causes a stable displacement of said disk provided with a surface coated with high friction material, so that it remains distant from said fixed contrast disk.

The main advantages of the present invention are as follows.

Releasing the two traction assemblies from one another, namely alternately decoupling a drum from the motor reducer thereof when the latter is not working, the whole cleaning system consumes significantly less energy.

While a traction assembly works, the other assembly is in such a condition that the drum thereof is decoupled from its motor reducer, so as not to create a passive resistance and to speed up the cable's unwinding movement, thus lightening the work of the triggered traction assembly.

Even more adavantageously the traction assemblies are more wear-resistant and last longer, ensuring higher efficiency.

The ensuing money saving is significant, both in terms of energy optimization and of maintenance costs and costs for any components replacement.

With reduced energy consumption and without any danger of overheating of the motor reducers, said cable systems for cleaning floors of the scraper-blade type can be used also in wide sheds, whose alleys for stabling cattles, pigs, horses, etc..., are very long.

Even more advantageously, the elastic means provided on said driven shaft absorb the stress caused by the joint associated with the drive shaft to the joint associated with the driven shaft owing to the translation of the motor reducer, thus avoiding damages.

Besides, said elastic means:
- keeps the two joints in coupling position when transmitting the rotating motion from the drive shaft to the driven shaft associated with the drum while the cable is being wound;
- keeps in slight friction the disk associated with the driven shaft and having a surface covered with a high friction material, pushing it against the contrast disk and avoiding a too quick unwinding of the cable when the drive shaft is decoupled from said driven shaft.

These and other advantages of the present invention shall appear more clearly from the following description of preferred embodiments, made by way of an indicative and non-limiting example, with reference to the figures, wherein:
Fig. 1 shows an axonometric view of a cable-driven traction assembly for systems for cleaning floors of the scraper-blade type according to the present invention;
Fig. 2 shows an axonometric view of a detail of the coupling member of the transmission assembly of Fig. 1;
Fig. 3 and 4 show respectively a longitudinal section and a front view of the traction assembly of Fig. 1;
Fig. 5°, 5b and 5c show a lateral view of the traction assembly of Fig. 1 during the operative phases.

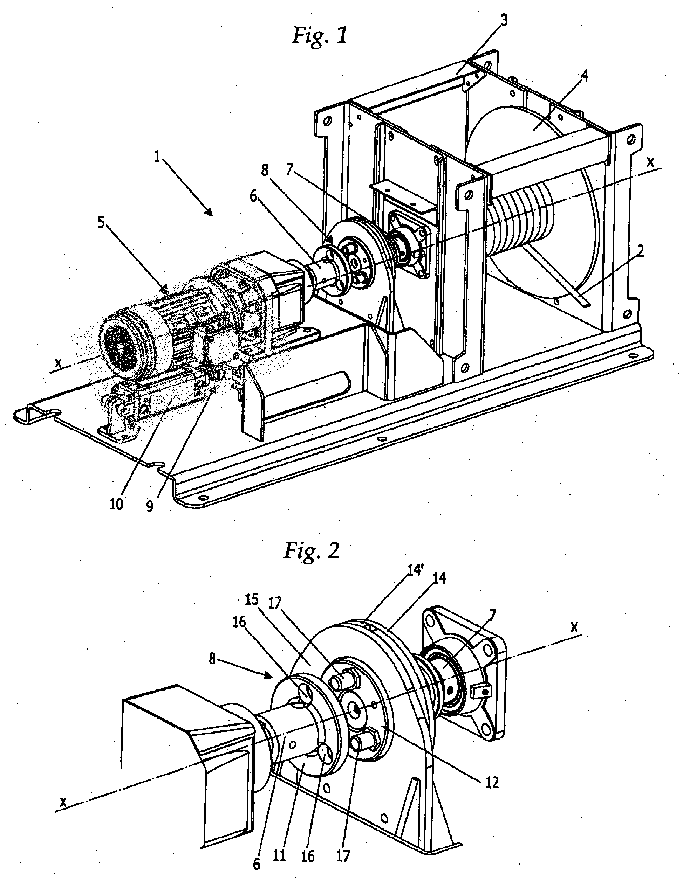

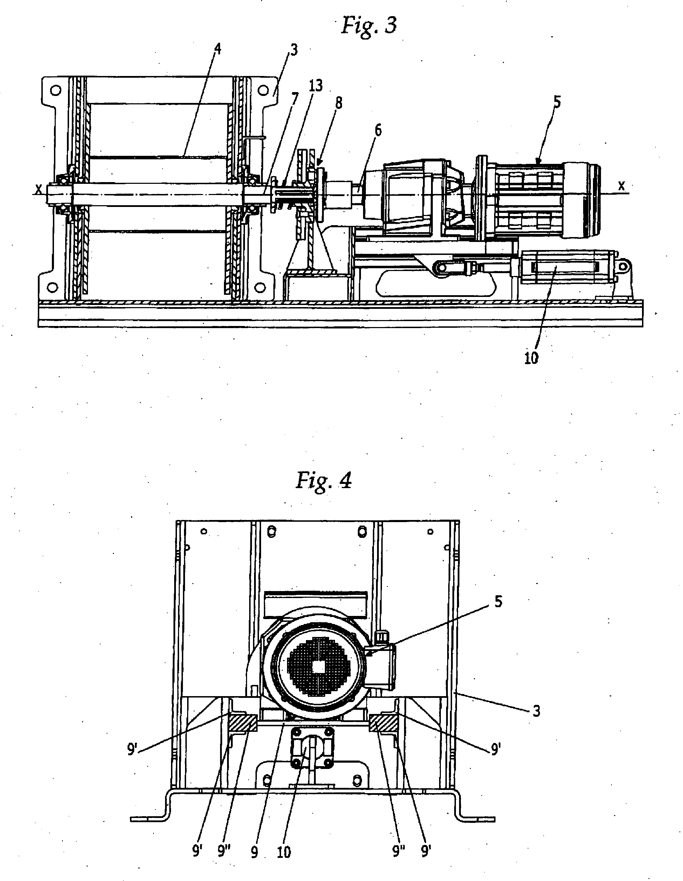

Fig. 1-4 show a cable-driven 2 traction assembly 1 for systems for cleaning floors of the scraper-blade type.

Said traction assembly 1 essentially comprises a frame 3 for fixing to the ground, a drum 4 on which said cable 2 is wound and a motor reducer 5.

Said drum 4 is rotatably associated with said frame 3 according to an axis of rotation x.

Said motor reducer 5 is arranged for imparting a motion of rotation on said drum 4 by means of a drive shaft 6 coaxial thereof.

Translating means for said motor reducer are associated with said frame 3.

Said translating means comprise a slide 9 and a double-action piston 10 and allow said motor reducer means 5 to slide axially in the two directions parallel to or along said axis of rotation x.

Said slide 9 is linearly mobile by means of two stainless guides 9' along which a polizene support 9", to which the motor reducer 5 is fixed, slides with a low level of friction.

Pistons 10 of the pneumatic-type are mainly used, but also hydraulic or electromechanical pistons can be used.

The translating movements and the operations of starting up/disconnection of the motor reducers that constitute the cleaning system are controlled by a command and control unit (not illustrated) and by position sensors of the known type.

Said traction assembly 1 also comprises a driven shaft 7 to which said drum 4 is steadily fixed and a mechanical-coupling member 8 set between said drum 4 and said motor reducer 5.

Said mechanical-coupling member 8 is selectively activatable and enables start or interruption of transmission of the movement from said motor reducer 5 to said drum 4.

With particular reference to Fig. 2, said coupling member 8 comprises two joints 11 and 12 complementary to one another.

The first joint 11 is associated with said drive shaft 6, a second joint 12 is associated with said driven shaft 7, and said joints co-operate to one another by shape fit.

Said first joint 11, having circular shape, comprises holes 16 arranged along the circumference thereof.

Said second joint 12, having circular shape too, comprises cilyndrical protrusions 17 dimensionally shaped so as to fit into said holes 16.

Said second joint 12 is slidingly associated, by means of a parallel grooves-coupling, with said driven shaft 7 so as to counter the force of resistance generated by the compression of the elastic means.

In fact, a helical spring 13 is arranged along said driven shaft 7, between said drum 4 and said second joint 12.

Stably associated to said second joint 12 is a disk 14 having a surface 14' coated with a material with a high coefficient of friction, for example brake lining.

Said disk 14, arranged as descripted above, has a mechanical friction role and is arranged for co-operating with a further disk 15, fixed to said frame 3, in order to provide a resistant torque.

Said resistant torque opposes free unwinding of said cable 2 from said drum 4 when the drive shaft 6 is decoupled from said driven shaft 7.

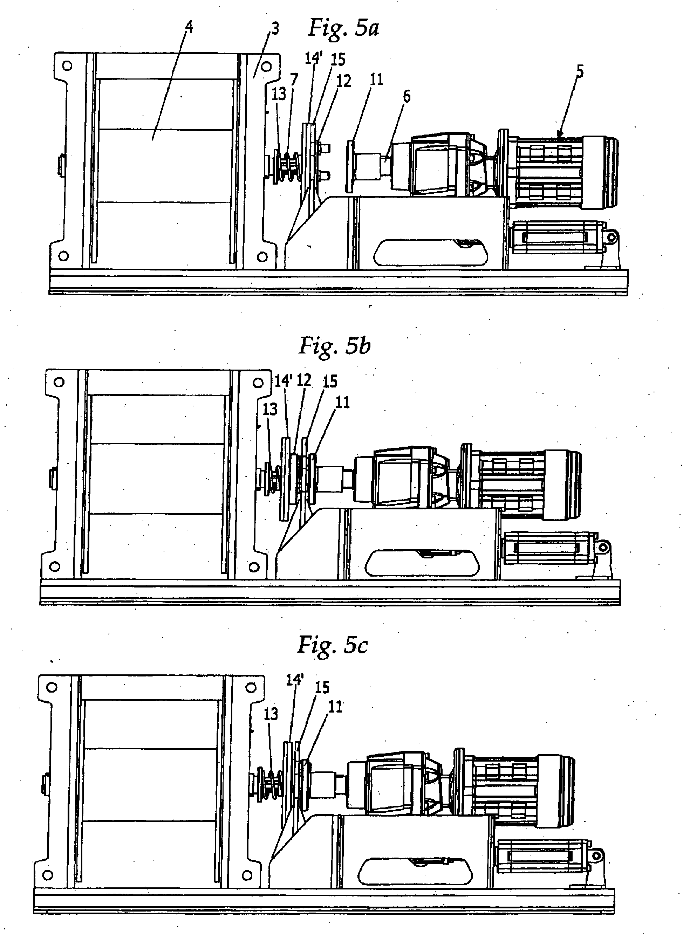

The operating mode of the cable-driven 2 traction assembly 1 for systems for cleaning floors of the scraper-blade type according to the present invention is described hereinbelow, with particular reference to Fig. 5a, 5b and 5c.

Fig. 5a shows the traction assembly 1 during the phase of unwinding of cable 2, driven instead by the opposite traction assembly, belonging to the same cleaning system.

The two joints 11 and 12 are decoupled and there is no transmission of motion from the drive shaft 6 to the driven shaft 7.

The surface 14' of the disk 14 acting as friction is in touch with the contrast disk 15 fixed to frame 3 owing to the thrust of spring 13 and generates a modest resistant torque which is necessary to set the speed of unwinding of the cable 2.

Fig. 5b shows the starting up phase of the traction assembly 1, simultaneous to the decoupling phase of the opposite traction assembly, controlled by the command and control unit of the whole cleaning system.

The joint 11 associated with the drive shaft 6 pushes joint 12 associated with the driven shaft 7 by means of the cylindrical protrusions 17, compressing the helical spring 13.

Once the motor reducer 5 is activated, thus activating the rotation of the drive shaft 6, the cylindrical protrusions 17 of the joint 12 find their space and fit into the holes 16 of the joint 11, and the motion is transmitted to the driven shaft 7 and therefore to the drum 4, as shown in Fig. 5c.

The traction assembly 1 is operating to wind up the cable 2, while the friction disk 14 is not connected to the contrast disk 15 in order not to generate resistant torques.

The present invention, as described and illustrated, allows achieving the aims set forth.

Practically, without prejudice to the principle of the invention, the shapes, materials, dimentions and construction details may be varied with respect to the descriptions and illustrations given above, without straying from the scope of the claims of the present invention.

The present invention has been descripted with reference to a cable-driven traction assembly for cleaning and disposing manure from the floors of sheds and stables, but can be indifferently applied to systems for cleaning floors on which the most various operations take place, in the agricoltural field, industrial field, alimentary field, etc...

## Claims

1. A cable-driven (2) traction assembly (1) for systems for cleaning floors of the scraper-blade type, comprising:
- a frame (3) for fixing to the ground;
- a drum (4), rotatably associated with said frame according to an axis of rotation (x), on which said cable (2) is wound;
- a motor reducer (5), arranged for imparting a motion of rotation in just one direction on said drum (4) by means of a drive shaft (6);
- a command and control unit for said traction assembly,
- a driven shaft (7), to which said drum (4) is steadily fixed;
- a device for braking said drum (4), **characterized in that** said traction assembly (1) further comprises:
- a selectively activatable mechanical-coupling member (8), set between said drive shaft (6) and said driven shaft (7) to enable start or interruption of transmission of the movement from said motor reducer (5) to said drum (4).

2. Traction assembly (1) according to claim 1, **characterized in that** said motor-reducer (5) cooperates with translating means (9, 10) associated with said frame (3) to slide axially in the two directions parallel to said axis of rotation (x).

3. Traction assembly (1) according to claim 2, **characterized in that** said translating means comprise a slide (9) and a double-acting piston (10).

4. Traction assembly (1) according to claim 1, **characterized in that** said coupling member (8) comprises a first joint (11) and a second joint (12), which are complementary to one another, arranged for cooperating by shape fit and respectively associated with said drive shaft (6) and with said driven shaft (7).

5. Traction assembly (1) according to claim 4, **characterized in that** said second joint (12) is slidingly associated with said driven shaft (7) so as to generate a force of contrast through elastic means (13) compressed under the action of thrust of said first joint.

6. Traction assembly (1) according to claim 4, **characterized in that** said braking device comprises:
- a disk (14) stably associated to said second joint (12) and having a surface (14') coated with a material with a high coefficient of friction;
- a further contrast disk (15), fixed to said frame (3),
wherein said surface (14') is arranged for cooperating by sliding with said contrast disk (15), in order to provide a resistant torque arranged for opposing unwinding of said cable (2) from said drum (4) when the drive shaft (6) is decoupled from said driven shaft (7).

7. Traction assembly (1) according to claim 6, **characterized in that** the coupling that is established between said first joint (11) and said second joint (12) causes a stable displacement of said disk (14) provided with said surface (14') so that it remains distant from said fixed contrast disk (15).

## Patentansprüche

1. Eine kabelgesteuerte (2) Traktionsgruppe (1) für Bodenreinigungssysteme des Abstreifschild-Typs, umfassend:
- ein Gestell (3), um am Boden befestigt zu werden;
- eine Trommel (4), drehbar verbunden mit dem besagten Gestell gemäß einer Rotationsachse (x), auf die das besagte Kabel (2) gewickelt wird;
- einen Getriebemotor (5), eingerichtet zur Weitergabe einer Drehbewegung in nur einer Richtung auf die besagte Trommel (4) mittels einer Antriebswelle (6);
- eine Befehls- und Steuereinheit für die besagte Traktionsgruppe;
- eine angetriebene Welle (7), an der die besagte Trommel (4) fest fixiert ist;
- eine Vorrichtung zum Bremsen der besagten Trommel (4), **gekennzeichnet dadurch, dass** die besagte Traktionsgruppe (1) weiterhin Folgendes umfasst:
- ein selektiv aktivierbares mechanisches Kopplungsglied (8), angebracht zwischen der besagten Antriebswelle (6) und der besagten angetriebenen Welle (7), um den Start oder die Unterbrechung der Übertragung der Bewegung von dem besagten Getriebemotor (5) zur besagten Trommel (4) zu ermöglichen.

2. Traktionsgruppe (1) gemäß Anspruch 1, **gekennzeichnet dadurch, dass** der besagte Getriebemotor (5) mit Übersetzungsmitteln (9, 10), die mit dem besagten Gestell (3) verbunden sind, zusammenarbeitet, um axial in beiden Richtungen parallel zur besagten Rotationsachse (x) zu gleiten.

3. Traktionsgruppe (1) gemäß Anspruch 2, **gekennzeichnet dadurch, dass** die besagten Übersetzungsmittel einen Schlitten (9) und einen doppeltwirkenden Kolben (10) umfassen.

4. Traktionsgruppe (1) gemäß Anspruch 1, **gekennzeichnet dadurch, dass** das besagte Kopplungsglied (8) ein erstes Gelenk (11) und ein zweites Gelenk (12) umfasst, die sich gegenseitig ergänzen, angeordnet, um durch Form-Passform zusammenzuarbeiten und jeweils mit der besagten Antriebswelle (6) und mit der besagten angetriebenen Welle (7) verbunden.

5. Traktionsgruppe (1) gemäß Anspruch 4, **gekennzeichnet dadurch, dass** das besagte zweite Gelenk (12) gleitend mit der besagten angetriebenen Welle (7) so verbunden ist, dass es eine Kontrastkraft durch elastische Mittel (13), die unter der Wirkung der Schubkraft des besagten ersten Gelenks zusammengepresst werden, erzeugt.

6. Traktionsgruppe (1) gemäß Anspruch 4, **gekennzeichnet dadurch, dass** die besagte Bremsvorrichtung Folgendes umfasst:
- eine Scheibe (14), dauerhaft verbunden mit dem besagten zweiten Gelenk (12) und mit einer Oberfläche (14'), die mit einem Material mit hohem Reibungskoeffizient beschichtet ist;
- eine weitere Kontrastscheibe (15), die an dem besagten Gestell (3) befestigt ist, wobei die besagte Oberfläche (14') angeordnet ist, um mit der besagten Kontrastscheibe (15) durch Gleiten zusammenzuarbeiten, um einen resistenten Drehmoment bereitzustellen, eingerichtet, um sich der Abwicklung des besagten Kabels (2) von der besagten Trommel (4) entgegenzusetzen, wenn die Antriebswelle (6) von der besagten angetriebenen Welle (7) abgekuppelt wird.

7. Traktionsgruppe (1) gemäß Anspruch 6, **gekennzeichnet dadurch, dass** die Kopplung, die zwischen dem besagten ersten Gelenk (11) und dem besagten zweiten Gelenk (12) hergestellt wird, eine stabile Verschiebung der besagten Scheibe (14), die mit der besagten Oberfläche (14') ausgestattet ist, verursacht, so dass diese fern bleibt von der besagten fixierten Kontrastscheibe (15).

## Revendications

1. Ensemble de traction (1) à câble (2) pour des systèmes de nettoyage des sols de type racloir, comprenant :
- un châssis (3) pour la fixation au sol ;
- un tambour (4), associé de manière rotative audit châssis selon un axe de rotation (x), sur lequel ledit câble (2) est enroulé ;
- un motoréducteur (5), prévu pour fournir un mouvement de rotation dans une seule direction audit tambour (4) au moyen d'un arbre menant (6) ;
- une commande et une unité de contrôle pour ledit ensemble de traction ;
- un arbre mené (7), auquel ledit tambour (4) est fixé de manière stable ;
- un dispositif pour freiner ledit tambour (4) ;
**caractérisé par le fait que** ledit ensemble de traction (1) comprend également :
- un membre d'accouplement mécanique activable sélectivement (8), placé entre ledit arbre menant (6) et ledit arbre mené (7) pour permettre le départ ou l'interruption de la transmission du mouvement entre ledit motoréducteur (5) et ledit tambour (4).

2. Ensemble de traction (1) selon la revendication 1, **caractérisé par le fait que** ledit motoréducteur (5) coopère avec des moyens de translation (9, 10) associés audit châssis (3) pour coulisser axialement dans les deux directions parallèles audit axe de rotation (x).

3. Ensemble de traction (1) selon la revendication 2, **caractérisé par le fait que** lesdits moyens de translation comprennent une glissière (9) et un piston à double action (10).

4. Ensemble de traction (1) selon la revendication 1, **caractérisé par le fait que** ledit membre d'accouplement (8) comprend un premier joint (11) et un deuxième joint (12), qui sont complémentaires entre eux, prévus pour coopérer par adaptation de forme et respectivement associés audit arbre menant(6) et audit arbre mené (7).

5. Ensemble de traction (1) selon la revendication 4, **caractérisé par le fait que** ledit deuxième joint (12) est associé de manière coulissante audit arbre mené (7) de manière à générer une force de contraste par l'intermédiaire de moyens élastiques (13) comprimés sous l'action de poussée dudit premier joint.

6. Ensemble de traction (1) selon la revendication 4, **caractérisé par le fait que** ledit dispositif comprend :
- un disque (14) associé de manière stable audit deuxième joint (12) et ayant une surface (14') revêtue d'un matériau avec un coefficient de friction élevé ;
- un autre disque de contraste (15), fixé audit châssis (3) ;
où ladite surface (14') est prévue pour coopérer en coulissant avec ledit disque de contraste (15), afin de fournir un couple résistant prévu pour s'opposer au déroulement dudit câble (2) sur ledit tambour (4) où l'arbre menant (6) est découplé dudit arbre mené (7).

7. Ensemble de traction (1) selon la revendication 6, **caractérisé par le fait que** l'accouplement qui est établi entre ledit premier joint (11) et ledit deuxième joint (12) cause un déplacement stable dudit disque (14) doté de ladite surface (14') de sorte qu'il reste distant dudit disque de contraste fixe (15).
